(19) Europäisches Patentamt
European Patent Office
Office européen des brevets

(11) Publication number : 0 362 232 B1

# (12) EUROPEAN PATENT SPECIFICATION

(45) Date of publication of patent specification : 06.11.91 Bulletin 91/45

(51) Int. Cl.$^5$ : A23K 1/17, A23K 1/18

(21) Application number : 88904145.5

(22) Date of filing : 28.04.88

(86) International application number : PCT/US88/01303

(87) International publication number : WO 88/09130 01.12.88 Gazette 88/26

## (54) PIRLIMYCIN GROWTH ENHANCERS FOR MEAT PRODUCING ANIMALS.

The file contains technical information submitted after the application was filed and not included in this specification

(30) Priority : 19.05.87 US 51961

(43) Date of publication of application : 11.04.90 Bulletin 90/15

(45) Publication of the grant of the patent : 06.11.91 Bulletin 91/45

(84) Designated Contracting States : AT BE CH DE FR GB IT LI LU NL SE

(56) References cited :
US-A- 3 261 687
US-A- 4 278 789

(73) Proprietor : THE UPJOHN COMPANY
301 Henrietta Street
Kalamazoo, Michigan 49001 (US)

(72) Inventor : MARRETT, Louis, E.
1930 Dickie
Kalamazoo, MI 49008 (US)
Inventor : EVANS, Roger
775 112th Avenue
Martin, MI 49070 (US)

(74) Representative : Perry, Robert Edward
GILL JENNINGS & EVERY 53-64 Chancery Lane
London WC2A 1HN (GB)

EP 0 362 232 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to the use of antibiotics to promote increased performance in meat producing animals, and especially in broiler chickens and swine.

It is known that meat-producing animals will gain more weight and gain it faster when various classes of compounds such as vitamins, minerals, estrogens, antibiotics, and tranquilizers are added to the diet. Although the presently available compounds are useful, new materials are still being sought that would produce weight gains more rapidly, to a greater extent more efficiently with respect to feed intake at a lower cost and without undesirable side effects or other deleterious effects such as the development of cross resistance with humans. It has now been found that the antibiotic Pirlimycin (I), when added to the diet of healthy meat producing animals, such as broiler chicks and swine, can improve both weight gain and feed efficiency.

INFORMATION DISCLOSURE

As indicated above the use of antibiotics, including lincomycin (III) and clindamycin (II), to promote animal growth productivity is known in the art. Pirlimycin is an analog of lincomycin and clindamycin.

In United States patent 3,086,912 lincomycin, its microbiological production and its use as a feed supplement to promote the growth of mammals and birds, either alone or in combination with other antibiotics is disclosed. Animal feed compositions containing lincomycin are described in United States patent 3, 155, 580.

Animal feed compositions and methods of treating animals having mycoplasma infections utilizing a combination of lincomycin and spectinomycin are described in United States patents 3,261,687 and 3,679,787 respectively.

Clindamycin and its therapeutic use in animals is described in United States patent 3,496,163. Formulations of clindamycin, including animal feed compositions, are disclosed in United States patent 3,539,689. It also discloses that the formulations can be given prophylactically to animals raised for neat to increase weight gain.

Pirlimycin,the 4-Cis-ethyl-L-pipecolic acid amide of 7-Cl-methylthiolincosaminide formulations thereof (including animal feed compositions) and methods of using it to treat bacterial infections are disclosed in United States patent 4,278,789. However, to applicant's knowledge, there is no disclosure or suggestion of feeding Pirlimycin to healthy animals in the prior art. The present invention is based on the fact that dosages of pirlimycin can be administered that are consistently lower than those shown in US patent 4,278,789, and lower than any dosages disclosed for the use of either lincomycin or clindamycin.

It is well documented that antibiotics in feed are more effective in the early stages of the growing period of the chick than in the latter. Confining the length of time only to the growing period during which an antibiotic can be fed without reducing its effectiveness on the market weight would be very important to the broiler producer. There are conflicting reports in the literature on the effects of the presence of antibiotics in the feed, and the degree of diminution in response when they are removed. Heuser and Norris, Poultry Sci. 31:857-862, 1952, reported that when antibiotics were withdrawn from the diet at four weeks the average growth response at eight weeks of age was approximately the same whether the antibiotic was continued or discontinued during the four-week period. March et al,, Poultry Sci. 51:1409-1414(1972) reported no significant differences in performance for floored-reared birds fed a combination of the antibiotics oleandomycin (11 mg/kg) and zinc bacitracin (27.5 mg/kg). The periods of antibiotic supplementation were, 1-4 weeks, 4-8 and 1-8 of the eight-week feeding trials. They concluded that the antibiotics were only effective in the feed during periods when they were present in the diets.

Marusich et al., Poultry Sci. 52:1774-1779(1973) also described similar trials in which four antibiotics were fed to broilers raised in battery brooders. The antibiotics (penicillin, moenomycin, zinc bacitracin, lincomycin) were fed either continuously or intermittently in four trials. Feeding periods were 0-2, 0-4, 4-8, 6-8 and 0-8 weeks. The combined data from the four trials showed significantly better growth and feed conversion for the continuous feed from 0-8 weeks and for intermittent feeding from 4-8 weeks.

The 0-2 or 0-4 week periods showed the antibiotics to be effective during the periods when the antibiotics were present in the feed, but these differences were not sustained after the antibiotics were withdrawn. No effect was observed from the 6-8 week feed period, it appeared that this period was too short for the antibiotics to exert any positive effects.

The use of antibiotics in swine have been discussed by Lasely, J.F., L.F. Tribble and A. G. Hagan, 1954 "Value of Antibiotics in Swine Rations", Research Bulletin #543, University of Missouri, Columbia, Missouri, and Hays, V. W., "Effectiveness of Feed Additive Usage of Antibacterial Agents in Swine and Poultry Production. The Hays Report. Publisher Rachelle Laboratories, Inc., 700 Henry Ford Avenue, Long Beach, California 90801.

Other reports on antibiotic usage show that in some species the effects of short-term or long-term feeding depend on the composition of the basal diets Dubos et al., J. Exp. Med. 117:231-243, 1963, and Eyssen and deSomer, J. Exp. Med. 117:127-138, 1963a,. Still other reports have shown that the responses obtained with antibiotics depend on how long they are used in the same environment. Waibel et al., Poultry Sci. 33:1141-1146, 1954 and Libby and Schaible, Science 121:733-734, 1955 all reported that continuous feeding of antibiotics resulted in decreased responses. In contrast, Heth and Bird, Poultry Sci. 41:755-760, 1962, Hays, V. W., Position Paper for Office of Technology Assessment 1976, Bird, World Poultry Sci. J. 24:309-312, 1968 and Bird Feedstuffs, 40:16-24, 1980 have all reported no diminution of responses after several years of continuous feeding in the same environment.

## SUMMARY OF THE INVENTION

This invention relates to the use of Pirlimycin as a growth promotant in meat producing animals.

The present invention particularly provides:

A method for obtaining increased performance in a healthy meat producing animal during its growth period which comprises the feeding of said animal a formulation containing a compound having the Formula I or a pharmaceutically acceptable acid addition salt thereof in combination with animal feed, wherein the concentration of compound is 0.5 to 55 mg per kilogram of feed. For poultry the amount of compound to be used is 0.5 to 11 mg per kilogram of feed and for swine 10 mg to 55 mg per kilogram of feed. This results in an average daily dose of 0.0358 to 0.879 mg of compound per bird and 8.7 to 47.6 mg of compound per animal for swine.

The invention further provides compositions comprising a compound of Formula I or one a pharmaceutically acceptable acid addition salt thereof in combination with an animal feed, wherein the concentration of the compound of Formula I or its pharmaceutically acceptable acid addition salt is 0.5 to 55 mg. per kilogram of feed. Formulations prepared from Pirlimycin hydrochloride are particularly effective as growth promotants for broiler chickens and swine.

The invention further provides a method wherein the formulations are fed to broiler chickens for only the first 21 days of the growth period.

The term "increased performance" means increased weight gain, increase feed efficiency or both.

## DESCRIPTION OF PREFERRED EMBODIMENT

Pirlimycin, its preparation and methods of preparing animal feed compositions containing it are described in United States patent 4,278,789. These preparations and methods are hereby incorporated by reference.

## POULTRY

Two trials were run concurrently and all trials lasted for 49 days.

Experimental animals. Day-old broiler chicks obtained from a commercial hatchery were used for each trial.

Breed/strain. A different broiler strain was obtained for each trial.

Lighting program. A continuous lighting program was used for all trials. The light period was continuous for 23 hours and 1 hour of darkness. The hour of darkness helped to condition the birds against piling up or suffocation in the event there was a power failure.

Litter. Wood shavings were used as litter. At the start of each trial fresh litter was mixed with approximately one bushel of old litter per pen. The old litter was free of antibiotic residue.

Health program. All chicks were vaccinated against Marek's disease. They were also vaccinated for Newcastle-Bronchitis at 14 days of age by the air-mist method.

Diets. All basal diets were formulated to meet or exceed the National Research Council (NRC) suggested nutrient guidelines. A coccidiostat, monensin (Coban), was used in all diets.

To prepare the experimental diets the test compounds were premixed into a carrier (soybean mill feed) and remixed into the appropriate amounts of the basal diets. All diets were in mash form and were fed ad libitum.

Treatment. The treatments utilized in these trials are shown in Table 1.

Allocations.

1. The sexes were assigned randomly to pens so that two blocks of males and two blocks of females existed at each location (room).
2. Chicks of the same sex were distributed randomly to the pens of each block. The randomization was such that chicks of the same sex from a single shipping box were equally distributed among all pens of a given block.
3. Treatments were allocated randomly to pens within blocks of six pens.

An outline of the dietary treatments and experimental design are shown in Table 1.

STATISTICAL ANALYSIS

Pen was the experimental unit for these trials. Treatments were individually compared to the negative control by first calculating improvements over control in average daily gain and in feed per unit of gain for each block. A treatment index was computed for each block as a weighted combination of percent improvements over control in growth (gain) and feed conversion (FC). The index used the following formula:

TGN = (TGN-CGN)CGN x 100

TFC = (CFC-TFC)/CFC x 100

TI = TGN/3 x TFC

where

TGN = improvement in treatment gain over controls

TFC = improvement in feed conversion over controls

TI = treatment index

An analysis of variance was run on the calculated parameters to obtain estimates of the trial and random error variance. Trial means squares were used as an estimate of error variance in a t-test of the hypothesis that these parameter means are not greater than zero.

Comparison of 21 day treatment with 49 day treatment was done by running an analysis of variance on the TGN, TFC and TI parameters comparing the treatment utilizing pirlimycin with controls.

RESULTS AND DISCUSSION

Results are shown in Tables 2 to 4. In these results the feeding of formulations containing drug are compared to the non-medicated control. At 21 days all the comparison parameters of growth, feed conversion and growth index for all treatments were significantly greater ($P<0.05$) than the negative control (Table 2). These same comparison parameters were also significantly greater ($P<0.05$) than zero for pirlimycin at 49 days (Table 3).

The data from these experiments clearly demonstrate that compounds of Formula I, in particular the Pirlimycin hydrochloride salt, will improve the growth rate and feed conversion of the healthy broiler chick whether fed from 1-21 days or 1-49 days.

Table 1

Outline of dietary treatments and experiment design

| Treatment Group | Pens/Treatment | Chicks/ Pen | Total Chicks/ Treatment | Sex Distribution Treatment Males | Females |
|---|---|---|---|---|---|
| 1 Pirlimycin (11.0 mg/kg) | 4 | 50 | 200 | 100 | 100 |
| 2 Pirlimycin (11.0 mg/kg) | 4 | 50 | 200 | 100 | 100 |
| 4 Control (Negative) | 4 | 50 | 200 | 100 | 100 |

Note: Treatment 1: no antibiotics in feed after 21 days

Table 2

Summary of weight gain, feed conversion and treatment indexes responses of Pirlimycin compared to its non-medicated controls when fed short term or long term (21 day data).

| | (1) Pirlimycin | (2) Pirlimycin |
|---|---|---|
| Feeding Period (Days) | 21 | 49 |
| Improved Gain (%) | 4.84 | 5.49 |
| Improved Feed/Gain (%) | 1.94 | 1.90 |
| Growth Index | 3.55 | 3.73 |

All values significantly ($P<0.05$) greater than negative control.

Treatments

1 1-21 days - basal control -22-49 days
2 1-49 days

Table 3

Summary of weight gain, feed conversion and treatment indexes responses of Pirlimycin compared to its non-medicated controls when fed short term or long term (49 day data).

| | (1) Pirlimycin | (2) Pirlimycin |
|---|---|---|
| Feed Period (days) | 21 | 49 |
| Improved Gain (%) | 2.84* | 3.24* |
| Improved Feed/gain (%) | 1.63* | 1.91* |
| Growth Index | 2.58* | 3.00* |

* All values significantly ($P<0.05$) greater than negative control.

Treatments

1 1-21 days - basal control - 22-49 days
2 1-49 days

Table 5

Summary of weight gain, feed conversion and treatment indexes for the evaluation of treatment responses.

| | | Improved Gain (%) | Improved Feed/ Gain (%) | Treatment Index (2) |
|---|---|---|---|---|
| Pirlimycin | (1) | 2.953 | 2.310 | 3.294(P0.01) |

All values significant by )P >0.05) greater than negative control

(1) 11 mg./kg

(2) Index Formula:

TGN - (TGN-CGN)/CGN x 100

TFC - (CFC-TFC)/CFX x 100

TI - TGN/3 + TFC

Where: TGN - improvement in treatment gain over controls

TFC - improvement in feed conversion over controls

TI - treatment index

SWINE

Facilities: Each trial was conducted in a facility where heating and ventilation equipment were adequate to maintain a desirable nursery environment. Each pen is equipped with a self-feeder and a nipple type drinker. The floor of each pen is solid concrete except for .74 $m^2$ of expanded metal slats over a flush gutter at one end of the pens for manure removal.

Animals: Equal numbers of healthy female and castrate male Hampshire X Yorkshire crossbred, weaned pigs five to six weeks of age were used for each trial. The experimental unit consisted of a pen of four pigs, two females and two males. Within each trial, pigs were assigned to blocks of pens by weight group and randomly allotted to individual pens within the blocks (same procedure followed for both sexes). Blocks of pens were randomly assigned to positions within the nursery and treatments were randomly assigned to pens of pigs within the block.

Diets and Treatments: A corn soybean meal based diet with approximately 18% crude protein, was based as the basal diet to which the drugs were added to provide the treatments.

Appropriate quantities of pirlimycin and clindamycin were premixed into soybean mill feed to a concentration of 44 grams per kilogram of premix. The premixes were then mixed singly with the diet to attain a finished feed level of 55 mg of drug activity per kilogram of diet.

Analysis of Data: Variables of interest are gain, expressed as average daily gain (ADG), feed efficiency, expressed as feed consumed divided by gain (F/G), and growth index (GI) which is calculated by summing the within block improvements in ADG and F/G with each weighted equally.

The responses from each drug for each variable was calculated within each weight block relative to controls, e.g.:

$$\text{Improvements in ADG} = \frac{100\,(\text{ADG of treated} - \text{ADG of Control})}{\text{ADG of Control}}$$

A t-test was used to evaluate the probability of chance differences. Estimates of variance were obtained from analysis of variance using a model with trials and blocks within trials.

Following the swine performance screen procedures, 384 Yorkshire X Hamsphire crossbred pigs were fed diets which contained either no drug or pirlimycin 55 mg/kg for 21 days. Each treatment was represented in eight blocks (four pigs per pen) per trial in four trials conducted over 13 months. A growth index (GI) was calculated from the within block comparaison to measure improvements in gain and feed efficiency for each compound. To pass this screen a compound must have a GI of at least 7.5 and be significantly different form zero at P <.10.

Pirlimycin was acceptable with a GI equal to 8.16 with P = .08.

From Table 5, it can be seen that the growth index for Pirlimycin on the average is positive and exceeds the minimum criteria of 7.5. From Table 6, it can be seen that the probability that this response is due to chance

is less than p <.10.

Table 5

Mean Improvement in Gain and Feed Conversions and Mean Growth Indexes by Trials

| Trial | Treatment | Mean Improvement In ADG | F/G | Growth Index |
|---|---|---|---|---|
| 1 | Pirlimycin | 11.70 | 1.59 | 13.29 |
| 2 | Pirlimycin | -3.49 | -2.43 | -5.92 |
| 3 | Pirlimycin | 4.65 | 0.82 | 5.46 |
| 4 | Pirlimycin | 15.08 | 4.74 | 19.81 |
| OVERALL | Pirlimycin | 6.98 | 1.18 | 8.16 |

Table 6

Statistical Parameters and t-Test

| | 0-21 Days |
|---|---|
| Pirlimycin | |
| Mean Growth Index | 8.16 |
| t | 1.47 |
| Prob. Mean is < = 0.0 | 0.08 |
| Variance Components: | |
| Trials | 69.5634 |
| Blocks (trial) | 423.4849 |
| Total | 493.0483 |

TABLE OF FORMULAS

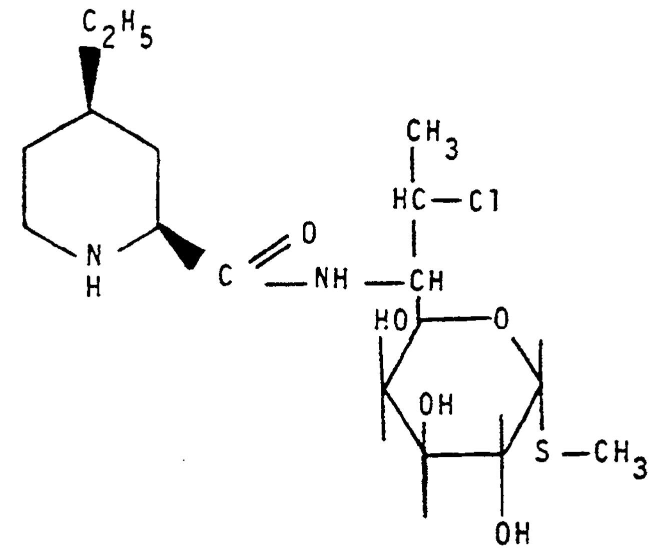

I

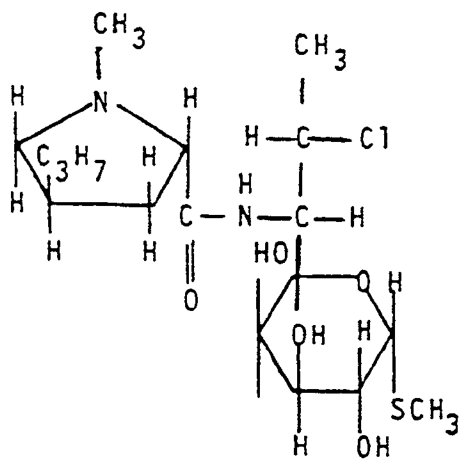

II

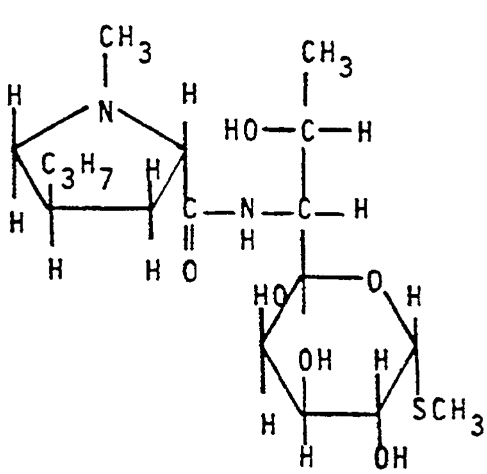

III

## Claims

1. A composition comprising animal feed and, per kg of the feed, 0.5 to 55 mg of the compound Pirlimycin (the 4-cis-ethyl-L-pipecolic acid amide of 7-Cl-methylthiolincosaminide) or a pharmaceutically-acceptable acid addition salt thereof.

2. A composition according to claim 1, wherein the compound is Pirlimycin hydrochloride.

3. A composition according to claim 2, which comprises 1 to 20 mg Pirlimycin hydrochloride per kg feed.

4. A method for promoting growth in a healthy meat-producing animal during its growth period, which comprises feeding the animal a composition according to any preceding claim.

5. A method according to claim 4, wherein the animal is poultry.

6. A method according to claim 5, wherein the poultry is a broiler chicken.

7. A method according to claim 6, wherein the composition comprises 2 to 11 mg Pirlimycin hydrochloride per kg feed.

8. A method according to claim 6, wherein the composition is fed only during the first 21 days of the growth period.

9. A method according to claim 8, wherein the composition comprises 0.5 to 11 mg Pirlimycin hydrochloride per kg feed.

10. A method according to claim 4, wherein the animal is swine.

11. A method according to claim 10, wherein the composition comprises 10 to 55 mg Pirlimycin hydrochloride per kg feed.

## Patentansprüche

1. Zusammensetzung enthaltend ein Tierfutter und pro kg des Futters, 0,5 bis 55 mg der Verbindung Pirlimycin (das 4-Cisethyl-L-pipecolinsäureamid von 7-Cl-methylthiolincosaminid) oder ein pharmazeutisch verträgliches Säureadditionssalz davon.

2. Zusammensetzung nach Anspruch 1, worin die Verbindung Pirlimycinhydrochlorid ist.

3. Zusammensetzung nach Anspruch 2, welche 1 bis 20 mg Pirlimycinhydrochlorid pro kg Futter enthält.

4. Verfahren zur Wachstumsförderung bei einem gesunden Fleisch produzierenden Tier, während der Wachstumsperiode, welches das Füttern des Tieres mit einer Zusammensetzung nach einem der vorhergehenden Ansprüche umfaßt.

5. Verfahren nach Anspruch 4, worin das Tier Geflügel ist.

6. Verfahren nach Anspruch 5, worin das Geflügel ein Brathuhn ist.

7. Verfahren nach Anspruch 6, worin die Zusammensetzung 2 bis 11 mg Pirlimycinhydrochlorid pro kg Futter enthält.

8. Verfahren nach Anspruch 6, worin die Zusammensetzung nur während der ersten 21 Tage der Wachstumsperiode verabreicht wird.

9. Verfahren nach Anspruch 8, worin die Zusammensetzung 0,5 bis 11 mg Pirlimycinhydrochlorid pro kg Futter enthält.

10. Verfahren nach Anspruch 4, worin das Tier ein Schwein ist.

11. Verfahren nach Anspruch 10, worin die Zusammensetzung 10 bis 55 mg Pirlimycinhydrochlorid pro kg Futter enthält.

## Revendications

1. Composition comprenant un aliment pour animaux et, par kg d'aliment, 0,5 à 55 mg du composé désigné sous le nom de pirlimycine (l'amide d'acide 4-cis-éthyl-L-pipécolique du 7-Cl-méthylthiolincosaminide) ou d'un de ses sels d'addition d'acides pharmaceutiquement acceptables.

2. Composition suivant la revendication 1, dans laquelle le composé est le chlorhydrate de pirlimycine.

3. Composition suivant la revendication 2, qui comprend 1 à 20 mg de chlorhydrate de pirlimycine par kg d'aliment.

4. Procédé pour activer la croissance d'un animal sain producteur de viande au cours de sa période de croissance, qui consiste à alimenter l'animal avec une composition suivant l'une quelconque des revendications précédentes.

5. Procédé suivant la revendication 4, dans lequel l'animal est la volaille.

6. Procédé suivant la revendication 5, dans lequel la volaille consiste en un poulet de chair.

7. Procédé suivant la revendication 6, dans lequel la composition comprend 2 à 11 mg de chlorhydrate de pirlimycine par kg d'aliment.

8. Procédé suivant la revendication 6, dans lequel la composition est administrée seulement au cours des 21 premiers jours de la période de croissance.

9. Procédé suivant la revendication 8, dans lequel la composition comprend 0,5 à 11 mg de chlorhydrate de pirlimycine par kg d'aliment.

10. Procédé suivant la revendication 4, dans lequel l'animal est le porc.

11. Procédé suivant la revendication 10, dans lequel la composition comprend 10 à 55 mg de chlorhydrate de pirlimycine par kg d'aliment.